# FASCICULE DE BREVET EUROPEEN

(11) **EP 4 158 169 B1**
(45) Date de publication et mention de la délivrance du brevet: **30.04.2025**
(21) Numéro de dépôt: 21732489.6
(22) Date de dépôt: 26.05.2021
(51) Int. Cl.: F02C 3/22, F02C 7/12, F02C 7/224

(54) **INSTALLATION DE RÉCHAUFFEMENT D'UN CARBURANT CRYOGÉNIQUE**
ANLAGE ZUM ERWÄRMEN EINES KRYOGENEN KRAFTSTOFFS
INSTALLATION FOR HEATING A CRYOGENIC FUEL

(30) Priorité: 28.05.2020 FR 2005628
(43) Date de publication de la demande: 05.04.2023
(73) Titulaire: SAFRAN, 75015 Paris (FR)
(72) Inventeur: JOUAN, Hugo Pierre Mohamed, 77550 MOISSY-CRAMAYEL (FR); MAALOUF, Samer, 77550 MOISSY-CRAMAYEL (FR)
(74) Mandataire: Regimbeau
(86) Numéro de dépôt international: PCT/FR2021/050954
(87) Numéro de publication internationale: WO 2021/240111

(56) Documents cités:
- EP-A1- 3 623 602
- EP-A1- 3 623 604
- GB-A- 2 131 094

## Description

### DOMAINE DE L'INVENTION

L'invention se situe dans le domaine des turbomachines pour aéronefs.

La présente invention concerne plus précisément une installation de réchauffement d'un carburant cryogénique alimentant la chambre de combustion d'une turbomachine d'aéronef, et concerne également une turbomachine d'aéronef fonctionnant avec ce carburant cryogénique et équipée d'une telle installation.

### ETAT DE LA TECHNIQUE

L'utilisation d'un carburant cryogénique pour alimenter la chambre de combustion d'une turbomachine d'aéronef est connue. Un tel carburant cryogénique est par exemple du gaz naturel liquide (connu sous l'acronyme "GNL"). Un tel carburant et moins coûteux que le kérosène classique et permet de limiter davantage les émissions de CO2. En effet, le GNL émet 25 % de CO2 en moins, par unité d'énergie.

Cependant, le GNL doit être transporté sous forme liquide pour que le volume à transporter dans un avion soit acceptable. Sa température de liquéfaction à un bar (10⁵ Pascal) est de moins 161 °C. Or, il est préférable d'injecter le GNL sous forme gazeuse dans la chambre de combustion, car cela présente de nombreux avantages. Il est donc nécessaire de le vaporiser, de le mettre sous pression et de le réchauffer jusqu'à ce qu'il atteigne la température d'injection, qui est de l'ordre de 50°C.

Dans l'état de la technique, il a été envisagé de réchauffer le carburant cryogénique en le faisant passer dans un échangeur de chaleur, à l'intérieur duquel circulait de l'air en provenance des gaz d'échappement de la tuyère de la turbomachine. Toutefois, il existe alors le risque que la vapeur d'eau présente dans ces gaz d'échappement ne se transforme en glace sur la paroi dudit échangeur de chaleur.

Il a également été envisagé de réchauffer le carburant cryogénique en le faisant passer dans un échangeur de chaleur, à l'intérieur duquel circulait de l'huile, par exemple de l'huile de lubrification des accessoires présents dans ladite turbomachine. Toutefois, en raison de la température extrêmement basse du carburant cryogénique, il existe un risque que l'huile de lubrification ne soit trop refroidie et devienne trop visqueuse pour pouvoir être utilisée de nouveau pour lubrifier ces accessoires.

De plus, une injection rapide de carburant cryogénique à l'état liquide sur les parois chaudes de l'échangeur huile/carburant cryogénique entraine une vaporisation d'une partie de ce liquide. Le gaz formé s'accumule dans le circuit de circulation dudit carburant cryogénique et la pression à l'intérieur de celui-ci augmente. Ceci empêche le carburant cryogénique liquide de circuler. Il est donc nécessaire de commencer par envoyer le carburant cryogénique liquide avec un faible débit dans l'échangeur huile/carburant cryogénique pour que le gaz formé puisse s'évacuer le temps que la paroi dudit échangeur ne se refroidisse jusqu'à atteindre la température du carburant cryogénique. Ensuite, seulement l'échangeur diphasique huile/carburant cryogénique est opérationnel.

Pour tout liquide, la température à laquelle ce liquide se vaporise, ainsi que l'énergie nécessaire à cette vaporisation, dépendent de la pression à laquelle il se trouve. Dans le cas présent, si l'on pressurise le carburant cryogénique uniquement en amont de l'échangeur, c'est-à-dire alors qu'il est encore en phase liquide, pour s'affranchir d'un compresseur en aval de l'échangeur, alors sa température de changement d'état, ainsi que l'énergie nécessaire à son changement d'état ne sont plus pilotables librement mais sont imposées par la pression du carburant à l'état liquide, en amont de l'échangeur. La gestion du système s'en trouve compliquée, si de nombreux échangeurs diphasiques sont présents.

Enfin, il pourrait être souhaitable d'utiliser le carburant dans la chambre de combustion non plus à l'état gazeux mais à l'état de fluide supercritique, ce qui n'est pas prévu dans l'état de la technique précité. Pour mémoire, on rappellera que le carburant atteint l'état de fluide supercritique lorsqu'il est amené à une température supérieure à sa température critique et à une pression supérieure à sa pression critique.

On connait déjà d'après les documents EP 3 623 604 et EP 3 623 602, une installation qui permet de réchauffer le carburant cryogénique qui sert à alimenter la chambre de combustion d'une turbomachine. Toutefois, ne décrit pas le fait que l'installation comprenne un vase d'expansion, ni le pilotage de la pompe pour maintenir le fluide caloporteur à une pression telle qu'il reste à l'état liquide.

On connait également d'après le document GB 2 131 094 une installation destinée à préchauffer un carburant, utilisé dans une turbomachine. Toutefois, cette installation utilise un carburant classique non cryogénique et un dispositif d'accumulation de pression qui n'est pas disposé en amont de la pompe.

### EXPOSE DE L'INVENTION

Un premier but de l'invention est de mettre au point une installation de réchauffement d'un carburant cryogénique alimentant la chambre de combustion d'une turbomachine d'aéronef, qui ne présente pas les inconvénients précités.

Un autre but de l'invention est qu'une telle installation fonctionne d'une manière écologiquement et économiquement intéressante.

A cet effet, l'invention concerne une installation de réchauffement d'un carburant cryogénique alimentant la chambre de combustion d'une turbomachine d'aéronef, cette installation comprenant :
- un réservoir de stockage dudit carburant cryogénique à l'état liquide,
- une canalisation d'alimentation configurée pour raccorder ledit réservoir à ladite chambre de combustion de la turbomachine d'aéronef,
- un circuit fermé de circulation d'un fluide caloporteur,
- un échangeur de chaleur carburant cryogénique/fluide caloporteur et au moins un échangeur de chaleur fluide caloporteur/fluide de travail, montés en série sur ledit circuit fermé, l'échangeur de chaleur carburant cryogénique/fluide caloporteur permettant de réchauffer le carburant cryogénique par un apport de chaleur fourni par le fluide caloporteur.

Conformément à l'invention, ce circuit fermé de circulation du fluide caloporteur comprend une pompe de mise en circulation dudit fluide caloporteur et un vase d'expansion fermé, raccordé audit circuit fermé en amont de ladite pompe par rapport au sens de circulation du fluide caloporteur dans le circuit fermé et ladite pompe est commandée par une unité centrale de façon à assurer un débit de fluide caloporteur à l'intérieur du circuit fermé qui permette de refroidir le ou les fluide(s) de travail et de réchauffer le carburant cryogénique, en fonction des phases de fonctionnement de l'aéronef et de façon que le vase d'expansion fermé maintienne le fluide caloporteur circulant dans ledit circuit fermé à une pression telle qu'il reste à l'état liquide et ne change pas de phase. Ladite installation comprend au moins deux échangeurs de chaleur fluide caloporteur/fluide de travail dont un échangeur de chaleur fluide caloporteur/air prélevé en sortie du compresseur de la turbomachine et un échangeur de chaleur fluide caloporteur/air de refroidissement des aubes de turbine. L'échangeur de chaleur fluide caloporteur/air prélevé en sortie du compresseur de la turbomachine est disposé en amont de l'échangeur de chaleur fluide caloporteur/air de refroidissement des aubes de turbine ou en amont de l'échangeur de chaleur fluide caloporteur/ air de refroidissement des aubes de turbine et des autres échangeurs de chaleur fluide caloporteur/fluide de travail, par rapport au sens de circulation du fluide caloporteur dans le circuit fermé.

Grâce à ces caractéristiques de l'invention, il est possible d'une part de récupérer de la chaleur issue de différentes sources chaudes présentes dans l'aéronef et de la transférer au fluide caloporteur qui circule dans le circuit fermé, d'autre part de maintenir ce fluide caloporteur à l'état monophasique liquide avec uniquement une fluctuation de sa température et enfin de n'avoir ensuite qu'un seul échangeur de chaleur avec le carburant cryogénique, dans lequel intervient le réchauffement de ce carburant.

Selon une première variante de réalisation de l'invention, l'installation comprend une pompe disposée sur la canalisation d'alimentation entre ledit réservoir et l'échangeur de chaleur, cette pompe est une pompe haute pression permettant de comprimer le carburant cryogénique à l'état liquide pour l'amener à une pression supérieure à sa pression critique et ledit échangeur de chaleur carburant cryogénique/fluide caloporteur est un échangeur de chaleur supercritique qui permet de réchauffer le carburant cryogénique à une température supérieure à sa température critique pour l'amener à l'état de fluide supercritique avant son introduction dans la chambre de combustion.

Selon une deuxième variante de réalisation de l'invention, l'installation comprend une pompe disposée sur la canalisation d'alimentation entre ledit réservoir et l'échangeur de chaleur, cette pompe est une pompe qui permet de comprimer le carburant cryogénique à l'état liquide pour l'amener à une pression inférieure à sa pression critique et ledit échangeur de chaleur carburant cryogénique/fluide caloporteur est un échangeur de chaleur diphasique, qui permet de réchauffer le carburant cryogénique par un apport de chaleur fourni par ledit fluide caloporteur, pour faire passer ce carburant cryogénique de l'état liquide à l'état gazeux, avant son introduction dans la chambre de combustion.

Selon d'autres caractéristiques avantageuses et non limitatives de l'invention, prises seules ou en combinaison :
- le fluide de travail de l'échangeur de chaleur fluide caloporteur/fluide de travail est choisi parmi l'air prélevé en sortie du compresseur de la turbomachine, l'huile de lubrification, l'air de refroidissement des aubes de la turbine de la turbomachine et le gaz d'échappement en sortie de tuyère de la turbomachine ;
- elle comprend un échangeur de chaleur fluide caloporteur/gaz d'échappement en sortie de tuyère de la turbomachine et celui-ci est monté en série avec l'échangeur de chaleur fluide caloporteur/air prélevé en sortie du compresseur de la turbomachine, de façon à se trouver en aval de celui-ci par rapport au sens de circulation du fluide caloporteur dans le circuit fermé ;
- elle comprend au moins l'échangeur de chaleur fluide caloporteur/air prélevé en sortie du compresseur de la turbomachine, un échangeur de chaleur fluide caloporteur/huile, l'échangeur de chaleur fluide caloporteur/air de refroidissement des aubes de turbine et un échangeur de chaleur fluide caloporteur/gaz d'échappement en sortie de tuyère de la turbomachine, montés en série sur le circuit fermé de circulation du fluide caloporteur ;
- elle comprend l'échangeur de chaleur fluide caloporteur/air prélevé en sortie du compresseur de la turbomachine, un échangeur de chaleur fluide caloporteur/huile, l'échangeur de chaleur fluide caloporteur/air de refroidissement des aubes de turbine et un échangeur de chaleur fluide caloporteur/gaz d'échappement en sortie de tuyère de la turbomachine, montés en série et dans cet ordre, sur le circuit fermé de circulation du fluide caloporteur ;
- elle comprend au moins deux échangeurs de chaleur fluide caloporteur/fluide de travail et pour au moins l'un de ces deux échangeurs fluide caloporteur/fluide de travail, une vanne de marche/arrêt est montée sur ledit circuit fermé en amont dudit échangeur de chaleur fluide caloporteur/fluide de travail et un circuit de dérivation raccorde un point dudit circuit fermé situé en amont de cette vanne marche/arrêt à un point dudit circuit fermé situé en aval dudit échangeur de chaleur fluide caloporteur/fluide de travail et ce circuit de dérivation est muni d'une vanne marche/arrêt ;
- le carburant cryogénique est du gaz naturel liquéfié ou de l'hydrogène liquide.
- ledit échangeur de chaleur diphasique carburant cryogénique/fluide caloporteur est un échangeur à plaques.

L'invention concerne également une turbomachine d'aéronef.

Conformément à l'invention, cette turbomachine comprend une chambre de combustion alimentée en carburant cryogénique et une installation de réchauffement de ce carburant cryogénique telle que précitée.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] est un schéma représentant un exemple de réalisation d'une turbomachine d'aéronef, ici une turbomachine à double flux et à double corps.
[Fig. 2] est un schéma représentant un exemple de réalisation d'une installation de réchauffement d'un carburant cryogénique, conforme à l'invention, ce carburant étant destiné à alimenter la chambre de combustion d'une turbomachine d'aéronef.
[Fig. 3] est un schéma représentant le fonctionnement de l'installation de la figure 2, lors du décollage de l'aéronef.
[Fig. 4] est un schéma représentant le fonctionnement de l'installation de la figure 2, lors de la montée de l'aéronef.
[Fig. 5] est un schéma représentant le fonctionnement de l'installation de la figure 2, lorsque l'aéronef est en croisière ou lorsqu'il est en phase de descente, ou encore lorsqu'il est au sol et que le moteur fonctionne au ralenti.
[Fig. 6] est une vue de dessus d'un étage d'un échangeur à plaques utilisé dans l'installation précitée.
[Fig. 7] est une vue de dessus d'un étage adjacent à l'étage de l'échangeur à plaques de la figure 6.

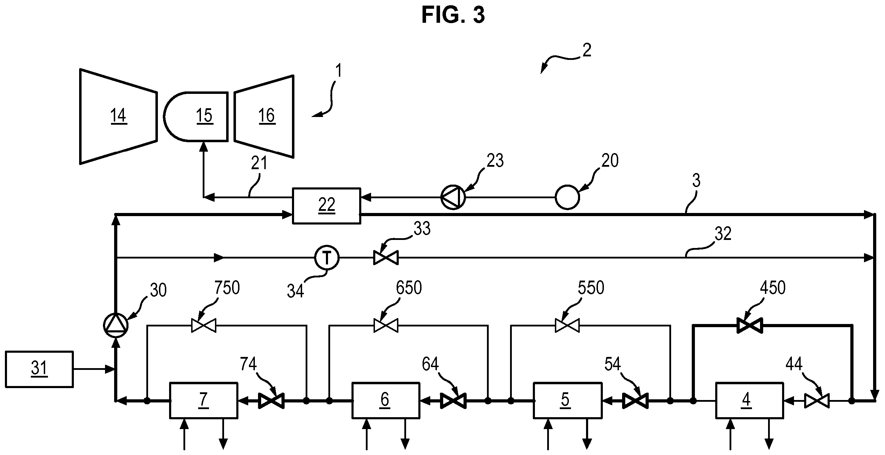

Sur les figures 3 à 5, l'installation est représentée de manière simplifiée.

### DESCRIPTION DETAILLEE DE L'INVENTION

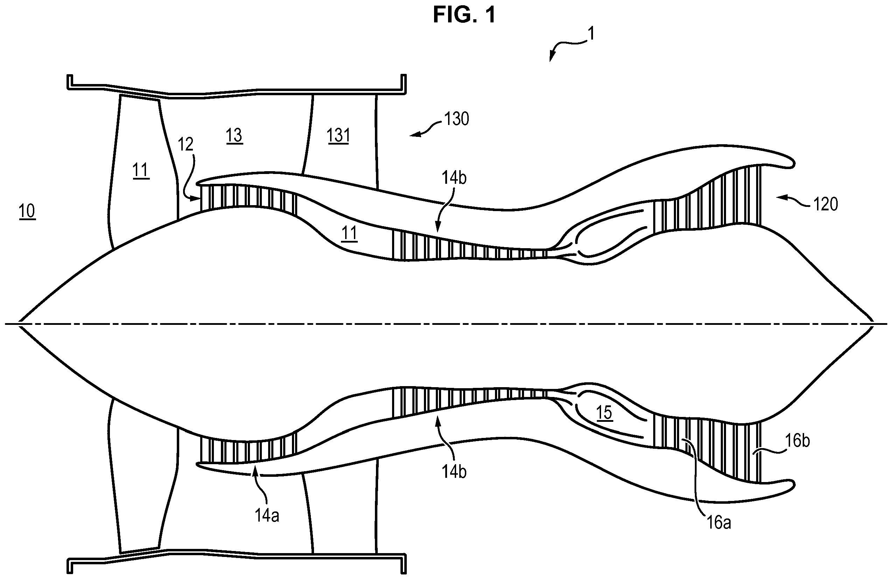

Pour mémoire, on rappellera ci-après brièvement la structure d'une turbomachine à double flux et à double corps, en faisant référence à la figure 1.

Sur celle-ci, on peut voir une turbomachine 1 à double flux avec successivement, dans le sens de circulation de l'air, c'est-à-dire de l'amont (à gauche sur la figure) vers l'aval (à droite sur la figure), une entrée d'air 10 et une soufflante 11, qui débite l'air d'une part dans une veine primaire 12 et d'autre part dans une veine secondaire 13. Par « veine », on entend le volume au travers duquel circule un flux d'air.

Le flux d'air circulant dans la veine primaire 12 traverse successivement un compresseur basse pression 14a, un compresseur haute pression 14b, une chambre de combustion 15, une turbine haute pression 16a et une turbine basse pression 16b, avant d'être éjecté à travers une tuyère de flux primaire 120.

Par ailleurs, le flux d'air secondaire qui circule dans la veine secondaire 13 est éjecté séparément à travers une tuyère de flux secondaire 130, après avoir traversé une série d'aubes directrices 131.

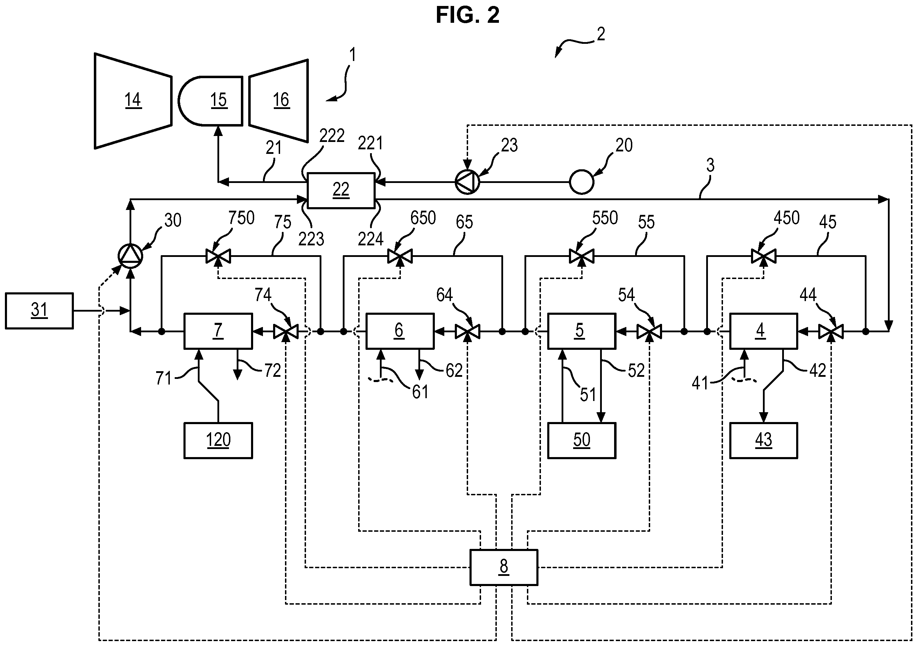

L'installation 2 de réchauffement d'un carburant cryogénique conforme à l'invention va maintenant être décrite en liaison avec la figure 2.

Cette installation 2 peut être utilisée avec la turbomachine 1, telle que décrite précédemment en liaison avec la figure 1. Toutefois, cette installation 2 peut également être utilisée avec un autre type de turbomachine, par exemple une turbomachine à simple corps ou une turbomachine ne comprenant qu'un seul compresseur et une seule turbine.

Ainsi, sur la figure 2, la turbomachine 1 est représentée de façon schématique, avec un compresseur portant la référence générale 14 et un détendeur portant la référence générale 16, disposés respectivement en amont et en aval de la chambre de combustion 15.

L'installation 2 comprend un réservoir 20 de stockage dudit carburant cryogénique à l'état liquide. Ce carburant est par exemple du gaz naturel liquéfié ou de l'hydrogène liquide. Ce réservoir 20 est raccordé à la chambre de combustion 15, par une canalisation 21. Un échangeur de chaleur carburant cryogénique/fluide caloporteur 22 est monté sur la canalisation 21 entre le réservoir 20 et la chambre de combustion 15. Cet échangeur de chaleur 22 permet de réchauffer le carburant cryogénique, avant que ce dernier ne soit injecté dans la chambre de combustion 15. À cet effet, un injecteur est prévu sur la canalisation 21, en aval de l'échangeur 22, bien que celui-ci ne soit pas représenté sur les figures.

Enfin, une pompe 23 est montée sur la canalisation 21, de préférence entre le réservoir de stockage 20 et l'échangeur de chaleur 22. Son fonctionnement est piloté par une unité centrale 8, telle qu'un ordinateur.

Selon une première variante de réalisation, la pompe est une pompe haute pression, qui permet d'amener le carburant cryogénique au-delà de sa pression critique et l'échangeur de chaleur 22 est un échangeur dit « supercritique », car il permet d'amener le carburant cryogénique au-delà de sa température critique. En sortie de l'échangeur 22, le carburant se trouve donc à l'état de fluide supercritique et est injecté dans cet état dans la chambre de combustion 15.

Pour mémoire, le point critique de l'hydrogène est de 32K (moins 241,15°C) et 12, 8 bars (12,8.10⁵ Pa) et le point critique du gaz naturel est de 190 K (moins 83,15°C) et 46,8 bars (46,8.10⁵ Pa).

Selon une deuxième variante de réalisation, la pompe 23 est une pompe qui permet de mettre sous pression le carburant cryogénique à l'état liquide mais à une pression inférieure à sa pression critique afin de délivrer le débit de carburant cryogénique nécessaire à l'aéronef en fonction de ces phases de vol, (décollage, vol en croisière, atterrissage, roulage sur la piste) et l'échangeur de chaleur 22 est un échangeur dit « diphasique », car il permet de faire passer le carburant cryogénique de l'état liquide, à l'état gazeux (changement de phase), avant son injection dans la chambre de combustion 15.

L'installation 2 comprend également un circuit fermé 3 de circulation d'un fluide caloporteur liquide. Le fluide caloporteur qui y circule est par exemple un halogénoalcane, connu sous le nom de marque « NOVEC 7500 » commercialisé par la société 3M. Toutefois, tout autre fluide caloporteur, qui reste en phase liquide et qui dispose des propriétés thermiques suffisantes pour assurer les échanges thermiques qui seront décrits ultérieurement, peut être utilisé.

La mise en circulation du fluide caloporteur à l'intérieur du circuit fermé 3 est assurée par une pompe 30, pilotée également par l'unité centrale 8.

Un vase d'expansion fermé 31 est raccordé au circuit 3, en un point situé en amont de la pompe de mise en circulation 30, par rapport au sens de circulation du fluide caloporteur dans le circuit fermé 3. Ce vase d'expansion fermé 31 permet de maintenir le fluide caloporteur qui se trouve dans le circuit 3 sous une pression telle qu'il reste à l'état liquide et ne change pas de phase.

L'échangeur de chaleur 22 est monté également sur le circuit fermé 3 pour réaliser l'échange de chaleur avec le fluide caloporteur.

De plus, au moins un échangeur de chaleur fluide caloporteur/fluide de travail est monté sur le circuit 3, en série avec l'échangeur 22. Différents fluides de travail sont utilisables et sont décrits ci-après.

Selon l'invention, le circuit 3 est muni d'au moins un échangeur de chaleur 4 « fluide caloporteur/air prélevé en sortie du compresseur 14 de la turbomachine 1 ». Cet air prélevé en sortie du compresseur 14 est connu sous la dénomination anglaise de « bleed ».

L'échangeur 4 est raccordé à son entrée 41, à la sortie d'air chaud du compresseur 14. L'air chaud circule à l'intérieur de l'échangeur de chaleur 4 à contre-courant du fluide caloporteur qui circule dans le circuit fermé 3. Il ressort de l'échangeur 4 par la sortie 42, après avoir fourni de la chaleur au fluide caloporteur. L'air ainsi refroidi peut ensuite être envoyé dans la cabine 43 de l'aéronef.

De façon avantageuse, l'installation 2 peut également comprendre un échangeur de chaleur 5 « fluide caloporteur/huile de lubrification ». Cet échangeur 5 est raccordé à son entrée 51 au réseau 50 d'huile de lubrification de différents éléments mécaniques de la turbomachine.

A l'intérieur de la turbomachine, un certain nombre d'éléments mécaniques doivent en effet être refroidis par de l'huile de lubrification afin de maintenir leur intégrité mécanique. Ces éléments mécaniques sont par exemple un réducteur d'une boîte d'accessoires ou des paliers supportant un arbre tournant. L'huile, qui s'est réchauffée au contact de ces éléments mécaniques, pénètre dans l'échangeur de chaleur 5, fournit de la chaleur au fluide caloporteur circulant dans le circuit 3 et ressort par la sortie 52 de l'échangeur 5, afin d'être renvoyée dans le réseau 50 d'huile de lubrification et de pouvoir être utilisée de nouveau au contact de ces éléments mécaniques.

Selon l'invention, l'installation 2 comprend également un échangeur de chaleur 6 « fluide caloporteur/air de refroidissement des aubes de turbine ». Cet échangeur 6 est raccordé à son entrée 61 au circuit d'air de refroidissement des aubes de la turbine 16 de façon à récupérer cet air une fois que celui-ci s'est réchauffé au contact desdites aubes. Cet air réchauffé fournit de la chaleur au fluide caloporteur circulant dans le circuit 3 et ressort refroidi, par la sortie 62 de l'échangeur 6. Il peut ensuite être renvoyé vers les aubes de la turbine 16, pour les refroidir.

Enfin, de façon avantageuse, l'installation 2 peut également comprendre un échangeur de chaleur 7 « fluide caloporteur/gaz d'échappement en sortie de tuyère de la turbomachine ». Ce gaz d'échappement est prélevé à la sortie de la tuyère 120, c'est-à-dire la tuyère de la veine primaire.

L'échangeur 7 est raccordé à son entrée 71 à la tuyère 120. L'air chaud circule à l'intérieur de l'échangeur de chaleur 7, à contre-courant du fluide caloporteur qui circule dans le circuit fermé 3. Il en ressort par la sortie 72, après avoir fourni de la chaleur au fluide caloporteur et est ensuite éjecté dans l'atmosphère via la partie aval de la tuyère.

On constate ainsi que le fluide caloporteur qui sort refroidi de l'échangeur de chaleur diphasique 22 est réchauffé progressivement après chaque passage dans l'un des échangeurs 4, 5, 6, 7 jusqu'à atteindre une température maximale à l'entrée 223 de l'échangeur 22. L'intensité du transfert de chaleur des sources chaudes, (c'est-à-dire des différents fluides de travail circulant dans les différents échangeurs 4, 5, 6 et 7), vers la source froide (c'est-à-dire le fluide caloporteur liquide) est pilotée par le débit de fluide caloporteur qui circule dans le circuit fermé 3. Ce débit est lui-même piloté par la vitesse de rotation de la pompe 30. Plus le débit du fluide caloporteur est important, plus il capte de chaleur des sources chaudes et plus sa température augmente.

Le vase d'expansion fermé 31 comprend deux parties séparées par une membrane élastique, la première partie est raccordée au circuit 3 et reçoit le fluide caloporteur et la deuxième partie est remplie par de l'air (ou un gaz) comprimé. Lorsque la température du fluide caloporteur augmente suite aux échanges thermiques avec au moins l'un des échangeurs 4, 5, 6 ou 7, ce fluide se dilate et la première partie du vase d'expansion 31 recueille le surplus de fluide caloporteur en évitant ainsi une augmentation de la pression dans le circuit 3. Inversement, si la température du fluide caloporteur diminue, le fluide se comprime et le surplus de fluide caloporteur présent dans le vase d'expansion 31 retourne dans le circuit 3.

Ce vase d'expansion 31 permet de maintenir le fluide caloporteur sous une pression suffisante pour augmenter ainsi la température d'ébullition de celui-ci et éviter qu'il ne passe à l'état gazeux. En conséquence, le fluide caloporteur circulant dans le circuit 3 varie uniquement en température mais sa pression reste constante et il reste en permanence en phase liquide.

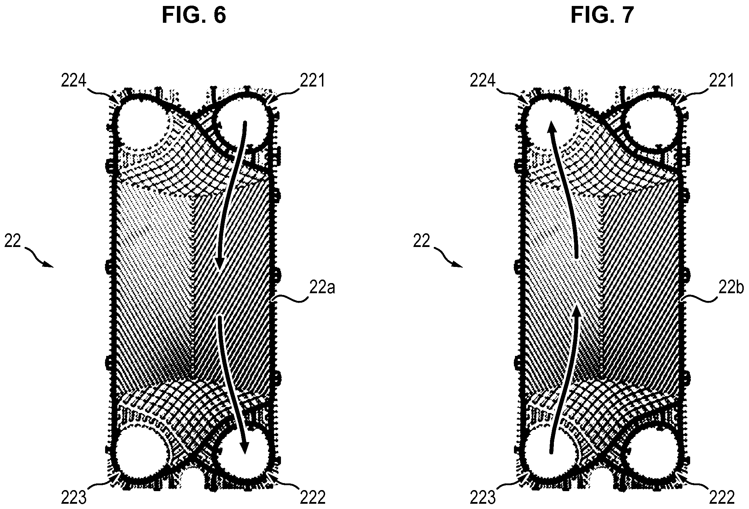

De façon avantageuse, l'échangeur de chaleur diphasique 22 est en échangeur à plaques. Un exemple de réalisation d'un tel échangeur à plaques est représenté sur les figures 6 et 7. Un tel échangeur est constitué de plusieurs plaques superposées en un matériau thermiquement bon conducteur, généralement du métal, par exemple de l'aluminium ou de l'acier inoxydable, ces différentes plaques étant assemblées entre elles par soudage, par brasure ou à l'aide de joints.

Un des principaux avantages de ce type d'échangeur est la maximisation des échanges convectifs, par rapport à d'autres types d'échangeurs. Enfin, de façon avantageuse, dans le mode de réalisation représenté sur les figures, et afin de maximiser le transfert thermique, les plaques de chaque étage comprennent une multitude de canaux disposés pour former des chevrons en V.

À un étage donné de l'échangeur de chaleur diphasique 22, étage référencé 22a sur la figure 6, (et ménagé entre deux plaques voisines), le carburant cryogénique à l'état liquide pénètre par l'entrée 221 de l'échangeur 22, traverse cet étage et en ressort à l'état gazeux par la sortie 222. A un étage immédiatement voisin, référencé 22b sur la figure 7, le fluide caloporteur pénètre par l'entrée 223 de l'échangeur 22, traverse cet étage et en ressort par la sortie 224 (voir également le schéma de la figure 2).

De préférence, et comme représenté sur la figure 2, le circuit 3 est équipé des quatre types d'échangeurs 4, 5, 6 et 7 précités et les différents échangeurs de chaleur 4, 5, 6 et 7 sont montés en série sur le circuit fermé 3. De préférence encore, ils sont montés dans cet ordre, par rapport au sens de circulation du fluide caloporteur à l'intérieur du circuit fermé 3, depuis la sortie 224 de l'échangeur de chaleur 22 jusqu'à l'entrée 223.

De préférence, lorsqu'il y a au moins deux échangeurs de chaleur, parmi les échangeurs 4, 5, 6 et 7 précités et afin de pouvoir sélectionner éventuellement uniquement certains d'entre eux, il est possible de prévoir pour au moins l'un de ces échangeurs, une vanne marche/arrêt, montée en amont de cet échangeur et un circuit de dérivation, qui raccorde un point du circuit fermé 3 situé en amont de cette vanne marche/arrêt et un point du circuit fermé 3 situé en aval dudit échangeur de chaleur.

Ainsi, par exemple, les échangeurs 4, 5, 6 et 7 sont munis de vannes marche/arrêt, référencées respectivement 44, 54, 64 et 74 et de circuits de dérivation, référencés respectivement 45, 55, 65 et 75. En outre, chaque circuit de dérivation précité 45, 55, 65 et 75 est muni d'une vanne marche/arrêt 450, 550, 650 et 750.

L'ensemble des vannes marche/arrêt 44, 54,64, 74, 450, 550,650 et 750 est piloté par l'unité centrale 8.

Les figures 3, 4 et 5 illustrent différentes situations de fonctionnement de l'installation 2, en fonction des phases de vol de l'aéronef. Dans chacune de ces figures, la circulation du fluide caloporteur est représentée par un trait épais.

La figure 3 illustre la situation lors du décollage de l'aéronef. Dans ce cas, les vannes 450, 54, 64 et 74 sont ouvertes, tandis que les vannes 44, 550, 650 et 750 sont fermées.

Ceci permet de ne pas utiliser l'échangeur de chaleur 4 fluide caloporteur/air prélevé en sortie du compresseur de la turbomachine. En effet durant le décollage, le prélèvement d'air est coupé pour obtenir une puissance de propulsion maximale. Il n'y a donc pas de débit d'air à refroidir.

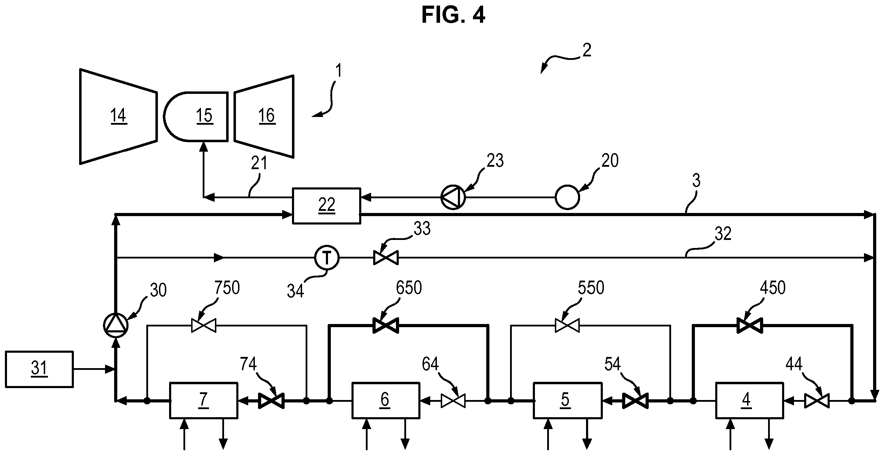

La figure 4 illustre la situation lors de la montée de l'aéronef après le décollage. Dans ce cas, les vannes 450, 54, 650, et 74 sont ouvertes, tandis que les vannes 44, 550, 64 et 750 sont fermées. Ceci permet de n'utiliser ni l'échangeur de chaleur 4 fluide caloporteur/air prélevé en sortie du compresseur de la turbomachine, ni l'échangeur de chaleur 6 fluide caloporteur/air de refroidissement des aubes de la turbine. Ainsi, après le décollage où le moteur atteint sa température maximale, l'échangeur 6 peut être fermé pour limiter les pertes puisque la fonction de refroidissement de l'air refroidissant les aubes n'est plus nécessaire.

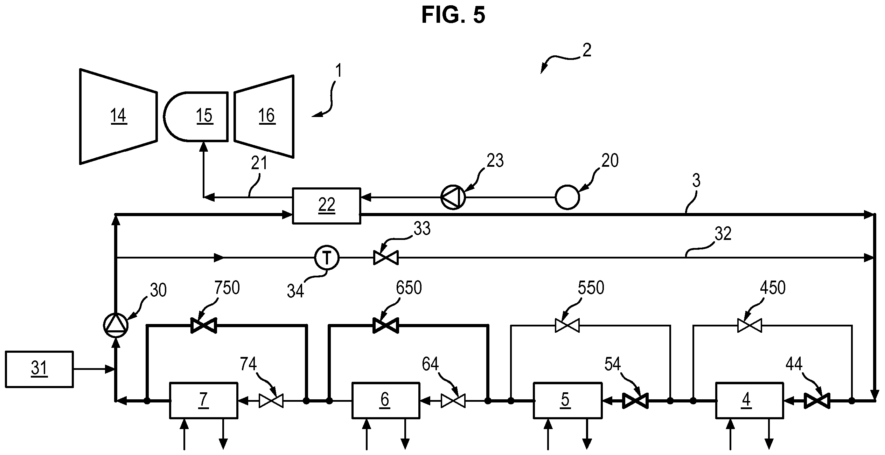

Enfin, la figure 5 illustre la situation en vol ou en phase de descente ou encore en phase de roulage au sol de l'aéronef lorsque la turbomachine de l'avion fonctionne au ralenti. Dans ce cas, les vannes 44, 54, 650 et 750 sont ouvertes, tandis que les vannes 450, 550, 64 et 74 sont fermées. Ceci permet de n'utiliser ni l'échangeur de chaleur 6 fluide caloporteur/air de refroidissement des aubes de la turbine, ni l'échangeur de chaleur 7 fluide caloporteur/gaz d'échappement en sortie de tuyère de la turbomachine. En effet, dans les situations précitées, le débit de carburant cryogénique est plus faible et il suffisant de le réchauffer en utilisant uniquement les échangeurs 4 et 5. L'échangeur 7 peut ainsi être fermé et l'air de la tuyère contourne cet échangeur pour limiter les pertes provoquées par sa présence dans le flux d'air.

Selon une variante de réalisation représentée uniquement sur les figures 3 à 5, il est possible de prévoir une canalisation de dérivation 32 dans le circuit fermé 3, cette canalisation de dérivation 32 joignant un point situé sur le circuit 3 en aval de la pompe de mise en circulation 30 et en amont de l'échangeur 22 à un point situé en aval de l'échangeur 22 et en amont de l'échangeur de chaleur 4 fluide caloporteur/air prélevé en sortie du compresseur de la turbomachine. Une vanne thermostatique 33 équipée d'un capteur de température 34 est prévue sur cette canalisation de dérivation. La vanne thermostatique 33 est pilotée en fonction de la température et éventuellement d'autres facteurs comme la phase de vol, ou démarrage/redémarrage. Cette canalisation de dérivation 32 permet de dériver une partie du débit qui passe dans l'échangeur de chaleur 22 lors du démarrage ou redémarrage et sur certaines phases de vol.

En dessous d'une certaine température, la vanne 33 est pilotée pour faire passer une partie du débit de fluide caloporteur dans la canalisation de dérivation 32 et non plus uniquement dans l'échangeur 22 et ce afin de piloter le changement de phase du carburant ou son état supercritique. Il est également possible de prévoir que dans une plage de température donnée et au fur et à mesure que la température détectée par le capteur 34 augmente, une portion croissante du fluide caloporteur soit dirigée dans la canalisation de dérivation 32.

L'installation de réchauffement 2 conforme à l'invention présente les avantages suivants :
- Elle ne comprend qu'un seul échangeur de chaleur carburant cryogénique/fluide caloporteur 22 et il est possible d'amener la chaleur nécessaire au réchauffement du carburant cryogénique via un unique circuit fermé 3 à l'intérieur duquel circule un fluide caloporteur maintenu à l'état liquide et dont seule la température varie.
- Contrairement à l'état de la technique, où le carburant cryogénique était réchauffé par passage dans un échangeur de chaleur, à l'intérieur duquel circulait de l'air en provenance de la veine secondaire, le risque de gel sur l'échangeur 22 est ici réduit car la température du fluide caloporteur qui circule à l'intérieur du circuit fermé 3 est plus facile à piloter.
- La canalisation 21 est courte, puisqu'il est nécessaire de ne prévoir qu'un seul échangeur 22 entre le réservoir 20 et la chambre de combustion 15 et non plusieurs échangeurs, comme lorsque l'on souhaite récupérer les calories de différents fluides de travail. Ceci permet de limiter la circulation du carburant cryogénique, notamment du gaz naturel liquéfié, dans des zones chaudes et donc inflammables de l'aéronef.

- En outre, un échangeur de chaleur diphasique, à l'intérieur duquel se produit un changement de phase, est plus difficile à piloter. En conséquence il est préférable d'en réduire le nombre.
- En outre, à l'intérieur de la canalisation 21, il est uniquement nécessaire de gérer la pression du carburant cryogénique, via la pompe 23, la température étant gérée par la chaleur apportée par le fluide caloporteur circulant dans le circuit fermé 3.
- Dans la variante de réalisation préférée de l'installation 2, représentée sur la figure 2, le fluide caloporteur a déjà été réchauffé par le passage au travers de l'échangeur 4, avant de parvenir dans l'échangeur 5. En conséquence, l'huile amenée au travers de l'échangeur 5 est refroidie mais jusqu'à une température suffisamment élevée pour l'empêcher de geler ou de figer.
- Les échangeurs de chaleur 4, 5 et 6 permettent de refroidir les différents fluides de travail qui y sont amenés, en fonction des besoins de refroidissement de ceux-ci.
- L'échangeur de chaleur 7 permet d'ajuster la température du fluide caloporteur circulant dans le circuit 3, à l'aide d'une source de chaleur, (ici les gaz d'échappement en sortie de tuyère 120 de la turbomachine), qui d'une part est permanente, dès lors que l'aéronef fonctionne, et qui d'autre part n'a pas besoin d'être refroidie pour les besoins de fonctionnement de l'aéronef. L'échangeur de chaleur 7 constitue donc une variable d'ajustement du fonctionnement de l'installation de réchauffement 2.

## Revendications

1. Installation (2) de réchauffement d'un carburant cryogénique alimentant la chambre de combustion (15) d'une turbomachine d'aéronef (1), cette installation (2) comprenant :
- un réservoir (20) de stockage dudit carburant cryogénique à l'état liquide,
- une canalisation d'alimentation (21) configurée pour raccorder ledit réservoir (20) à ladite chambre de combustion (15) de la turbomachine d'aéronef,
- un circuit fermé (3) de circulation d'un fluide caloporteur,
- un échangeur de chaleur (22) carburant cryogénique/fluide caloporteur et au moins un échangeur de chaleur (4, 5, 6, 7) fluide caloporteur/fluide de travail, montés en série sur ledit circuit fermé (3), l'échangeur de chaleur (22) carburant cryogénique/fluide caloporteur permettant de réchauffer le carburant cryogénique par un apport de chaleur fourni par le fluide caloporteur,
**caractérisée en ce que** le circuit fermé (3) de circulation du fluide caloporteur comprend une pompe (30) de mise en circulation dudit fluide caloporteur et un vase d'expansion fermé (31), raccordé audit circuit fermé (3) en amont de ladite pompe (30) par rapport au sens de circulation du fluide caloporteur dans le circuit fermé (3), **en ce que** ladite pompe (30) est commandée par une unité centrale (8) de façon à assurer un débit de fluide caloporteur à l'intérieur du circuit fermé (3) qui permette de refroidir le ou les fluide(s) de travail et de réchauffer le carburant cryogénique, en fonction des phases de fonctionnement de l'aéronef et de façon que le vase d'expansion fermé (31) maintienne le fluide caloporteur circulant dans ledit circuit fermé (3) à une pression telle qu'il reste à l'état liquide et ne change pas de phase, **en ce que** ladite installation (2) comprend au moins deux échangeurs de chaleur (4, 5, 6, 7) fluide caloporteur/fluide de travail dont un échangeur de chaleur (4) fluide caloporteur/air prélevé en sortie du compresseur de la turbomachine et un échangeur de chaleur (6) fluide caloporteur/air de refroidissement des aubes de turbine et **en ce que** l'échangeur (4) de chaleur fluide caloporteur/air prélevé en sortie du compresseur de la turbomachine est disposé en amont de l'échangeur de chaleur (6) fluide caloporteur/air de refroidissement des aubes de turbine ou en amont de l'échangeur de chaleur (6) fluide caloporteur/ air de refroidissement des aubes de turbine et des autres échangeurs de chaleur (5, 7) fluide caloporteur/fluide de travail, par rapport au sens de circulation du fluide caloporteur dans le circuit fermé (3).

2. Installation selon la revendication 1, **caractérisée en ce qu'**elle comprend une pompe (23) disposée sur la canalisation d'alimentation (21) entre ledit réservoir (20) et l'échangeur de chaleur (22), **en ce que** cette pompe (23) est une pompe haute pression permettant de comprimer le carburant cryogénique à l'état liquide pour l'amener à une pression supérieure à sa pression critique et **en ce que** ledit échangeur de chaleur (22) carburant cryogénique/fluide caloporteur est un échangeur de chaleur supercritique qui permet de réchauffer le carburant cryogénique à une température supérieure à sa température critique pour l'amener à l'état de fluide supercritique avant son introduction dans la chambre de combustion (15).

3. Installation selon la revendication 1, **caractérisée en ce qu'**elle comprend une pompe (23) disposée sur la canalisation d'alimentation (21) entre ledit réservoir (20) et l'échangeur de chaleur (22), **en ce que** cette pompe (23) est une pompe qui permet de comprimer le carburant cryogénique à l'état liquide pour l'amener à une pression inférieure à sa pression critique et **en ce que** ledit échangeur de chaleur (22) carburant cryogénique/fluide caloporteur est un échangeur de chaleur diphasique, qui permet de réchauffer le carburant cryogénique par un apport de chaleur fourni par ledit fluide caloporteur, pour faire passer ce carburant cryogénique de l'état liquide à l'état gazeux, avant son introduction dans la chambre de combustion (15).

4. Installation selon l'une quelconque des revendications précédentes, **caractérisée en ce que** le fluide de travail de l'échangeur de chaleur (4, 5, 6, 7) fluide caloporteur/fluide de travail est choisi parmi l'air prélevé en sortie du compresseur de la turbomachine, l'huile de lubrification, l'air de refroidissement des aubes de la turbine de la turbomachine et le gaz d'échappement en sortie de tuyère de la turbomachine.

5. Installation selon l'une quelconque des revendications précédentes, **caractérisée en ce qu'**elle comprend un échangeur de chaleur (7) fluide caloporteur/gaz d'échappement en sortie de tuyère de la turbomachine et **en ce que** celui-ci est monté en série avec l'échangeur de chaleur (4) fluide caloporteur/air prélevé en sortie du compresseur de la turbomachine, de façon à se trouver en aval de celui-ci par rapport au sens de circulation du fluide caloporteur dans le circuit fermé (3).

6. Installation selon l'une quelconque des revendications précédentes, **caractérisée en ce qu'**elle comprend au moins l'échangeur de chaleur (4) fluide caloporteur/air prélevé en sortie du compresseur de la turbomachine, un échangeur de chaleur (5) fluide caloporteur/huile, l'échangeur de chaleur (6) fluide caloporteur/air de refroidissement des aubes de turbine et un échangeur de chaleur (7) fluide caloporteur/gaz d'échappement en sortie de tuyère de la turbomachine, montés en série sur le circuit fermé (3) de circulation du fluide caloporteur.

7. Installation selon la revendication 6, **caractérisée en ce qu'**elle comprend l'échangeur de chaleur (4) fluide caloporteur/air prélevé en sortie du compresseur de la turbomachine, l'échangeur de chaleur (5) fluide caloporteur/huile, l'échangeur de chaleur (6) fluide caloporteur/air de refroidissement des aubes de turbine et l'échangeur de chaleur (7) fluide caloporteur/gaz d'échappement en sortie de tuyère de la turbomachine, montés en série et dans cet ordre, sur le circuit fermé (3) de circulation du fluide caloporteur.

8. Installation selon l'une quelconque des revendications précédentes, **caractérisée en ce qu'**elle comprend au moins deux échangeurs de chaleur (4, 5, 6, 7) fluide caloporteur/fluide de travail et **en ce que** pour au moins l'un de ces deux échangeurs (4, 5, 6, 7) fluide caloporteur/fluide de travail, une vanne de marche/arrêt (44, 54, 64, 74) est montée sur ledit circuit fermé (3) en amont dudit échangeur (4, 5, 6, 7) de chaleur fluide caloporteur/fluide de travail et **en ce qu'**un circuit de dérivation (45, 55, 65, 75) raccorde un point dudit circuit fermé (3) situé en amont de cette vanne marche/arrêt (44, 54, 64, 74) à un point dudit circuit fermé (3) situé en aval dudit échangeur (4, 5, 6, 7) de chaleur fluide caloporteur/fluide de travail et **en ce que** ce circuit de dérivation (45, 55, 65, 75) est muni d'une vanne marche/arrêt (450, 550, 650, 750).

9. Installation selon l'une quelconque des revendications précédentes,, **caractérisée en ce que** le carburant cryogénique est du gaz naturel liquéfié ou de l'hydrogène liquide.

10. Installation selon la revendication 3, **caractérisée en ce que** ledit échangeur de chaleur diphasique (22) carburant cryogénique/fluide caloporteur est un échangeur à plaques.

11. Turbomachine d'aéronef (1), **caractérisée en ce qu'**elle comprend une chambre de combustion (15) alimentée en carburant cryogénique et une installation de réchauffement (2) de ce carburant cryogénique selon l'une quelconque des revendications 1 à 10.

## Patentansprüche

1. Anlage (2) zum Erwärmen eines kryogenen Kraftstoffs, der die Brennkammer (15) einer Luftfahrzeug-Turbomaschine (1) versorgt, wobei diese Anlage (2) umfasst:
- einen Vorratsbehälter (20) zur Lagerung des kryogenen Kraftstoffs in flüssigem Zustand,
- eine Versorgungsleitung (21), die ausgelegt ist, um den Vorratsbehälter (20) mit der Brennkammer (15) der Luftfahrzeug-Turbomaschine zu verbinden,
- einen geschlossenen Zirkulationskreislauf (3) eines Wärmeträgerfluids,
- einen Wärmetauscher (22) kryogener Kraftstoff/Wärmeträgerfluid und mindestens einen Wärmetauscher (4, 5, 6, 7) Wärmeträgerfluid/Arbeitsfluid, die in dem geschlossenen Kreislauf (3) in Reihe angebracht sind, wobei es der Wärmetauscher (22) kryogener Kraftstoff/Wärmeträgerfluid ermöglicht, den kryogenen Kraftstoff durch eine von dem Wärmeträgerfluid bereitgestellte Wärmezufuhr zu erwärmen,
**dadurch gekennzeichnet, dass** der geschlossene Zirkulationskreislauf (3) des Wärmeträgerfluids eine Pumpe (30), die das Wärmeträgerfluid in Zirkulation versetzt, und ein geschlossenes Ausdehnungsgefäß (31) umfasst, das mit dem geschlossenen Kreislauf (3) stromaufwärts der Pumpe (30) in Bezug auf die Zirkulationsrichtung des Wärmeträgerfluids im geschlossenen Kreislauf (3) verbunden ist, dass die Pumpe (30) von einer Zentraleinheit (8) derart gesteuert wird, dass ein Wärmeträgerfluiddurchsatz im Inneren des geschlossenen Kreislaufs (3) gewährleistet ist, der es ermöglicht, das oder die Arbeitsfluid(e) zu kühlen und den kryogenen Kraftstoff zu erwärmen, in Abhängigkeit von den Betriebsphasen des Luftfahrzeugs und derart, dass das geschlossene Ausdehnungsgefäß (31) das in dem geschlossenen Kreislauf (3) zirkulierende Wärmeträgerfluid auf einem Druck hält, der derart ist, dass es im flüssigen Zustand bleibt und seine Phase nicht ändert, dass die Anlage (2) mindestens zwei Wärmetauscher (4, 5, 6, 7) Wärmeträgerfluid/Arbeitsfluid umfasst, darunter einen Wärmetauscher (4) Wärmeträgerfluid/am Ausgang des Kompressors der Turbomaschine entnommene Luft und einen Wärmetauscher (6) Wärmeträgerfluid/Kühlluft für die Turbinenschaufeln und dass der Wärmetauscher (4) Wärmeträgerfluid/am Ausgang des Kompressors der Turbomaschine entnommene Luft stromaufwärts des Wärmetauschers (6) Wärmeträgerfluid/Kühlluft für die Turbinenschaufeln oder stromaufwärts des Wärmetauschers (6) Wärmeträgerfluid/Kühlluft für die Turbinenschaufeln und der anderen Wärmetauscher (5, 7) Wärmeträgerfluid/Arbeitsfluid in Bezug auf die Zirkulationsrichtung des Wärmeträgerfluids in dem geschlossenen Kreislauf (3) angeordnet ist.

2. Anlage nach Anspruch 1, **dadurch gekennzeichnet, dass** sie eine Pumpe (23) umfasst, die auf der Versorgungsleitung (21) zwischen dem Vorratsbehälter (20) und dem Wärmetauscher (22) angeordnet ist, dass diese Pumpe (23) eine Hochdruckpumpe ist, die es ermöglicht, den kryogenen Kraftstoff im flüssigen Zustand zu komprimieren, um ihn auf einen Druck oberhalb seines kritischen Drucks zu bringen, und dass der Wärmetauscher (22) kryogener Kraftstoff/Wärmeträgerfluid ein überkritischer Wärmetauscher ist, der es ermöglicht, den kryogenen Kraftstoff auf eine Temperatur oberhalb seiner kritischen Temperatur zu erwärmen, um ihn vor seiner Einleitung in die Brennkammer (15) in den superkritischen Fluidzustand zu bringen.

3. Anlage nach Anspruch 1, **dadurch gekennzeichnet, dass** sie eine Pumpe (23) umfasst, die auf der Versorgungsleitung (21) zwischen dem Vorratsbehälter (20) und dem Wärmetauscher (22) angeordnet ist, dass diese Pumpe (23) eine Pumpe ist, die es ermöglicht, den kryogenen Kraftstoff im flüssigen Zustand zu komprimieren, um ihn auf einen Druck unterhalb seines kritischen Drucks zu bringen, und dass der Wärmetauscher (22) kryogener Kraftstoff/Wärmeträgerfluid ein Zweiphasen-Wärmetauscher ist, der es ermöglicht, den kryogenen Kraftstoff durch eine von dem Wärmeträgerfluid bereitgestellte Wärmezufuhr zu erwärmen, um diesen kryogenen Kraftstoff aus dem flüssigen Zustand in den gasförmigen Zustand zu überführen, bevor er in die Brennkammer (15) eingeleitet wird.

4. Anlage nach einem der vorhergehenden Ansprüche, **dadurch gekennzeichnet, dass** das Arbeitsfluid des Wärmetauschers (4, 5, 6, 7) Wärmeträgerfluid/Arbeitsfluid aus der am Ausgang des Kompressors der Turbomaschine entnommenen Luft, dem Schmieröl, der Kühlluft für die Turbinenschaufeln der Turbomaschine und dem Abgas am Düsenausgang der Turbomaschine ausgewählt ist.

5. Anlage nach einem der vorhergehenden Ansprüche, **dadurch gekennzeichnet, dass** sie einen Wärmetauscher (7) Wärmeträgerfluid/Abgas am Düsenausgang der Turbomaschine umfasst und dass dieser mit dem Wärmetauscher (4) Wärmeträgerfluid/am Ausgang des Kompressors der Turbomaschine entnommene Luft in Reihe angebracht ist, so dass er sich in Bezug auf die Zirkulationsrichtung des Wärmeträgerfluids in dem geschlossenen Kreislauf (3) stromabwärts von diesem befindet.

6. Anlage nach einem der vorhergehenden Ansprüche, **dadurch gekennzeichnet, dass** sie mindestens den Wärmetauscher (4) Wärmeträgerfluid/am Ausgang des Kompressors der Turbomaschine entnommene Luft, einen Wärmetauscher (5) Wärmeträgerfluid/Öl, den Wärmetauscher (6) Wärmeträgerfluid/Kühlluft für die Turbinenschaufeln und einen Wärmetauscher (7) Wärmeträgerfluid/Abgas am Düsenausgang der Turbomaschine umfasst, die in Reihe in dem geschlossenen Zirkulationskreislauf (3) des Wärmeträgerfluids angebracht sind.

7. Anlage nach Anspruch 6, **dadurch gekennzeichnet, dass** sie den Wärmetauscher (4) Wärmeträgerfluid/am Ausgang des Kompressors der Turbomaschine entnommene Luft, den Wärmetauscher (5) Wärmeträgerfluid/Öl, den Wärmetauscher (6) Wärmeträgerfluid/Kühlluft für die Turbinenschaufeln und den Wärmetauscher (7) Wärmeträgerfluid/Abgas am Düsenausgang der Turbomaschine umfasst, die in Reihe und in dieser Reihenfolge in dem geschlossenen Zirkulationskreislauf (3) des Wärmeträgerfluids angebracht sind.

8. Anlage nach einem der vorhergehenden Ansprüche, **dadurch gekennzeichnet, dass** sie mindestens zwei Wärmetauscher (4, 5, 6, 7) Wärmeträgerfluid/Arbeitsfluid umfasst und dass für mindestens einen dieser beiden Wärmetauscher (4, 5, 6, 7) Wärmeträgerfluid/Arbeitsfluid ein Ein/Aus-Ventil (44, 54, 64, 74) in dem geschlossenen Kreislauf (3) stromaufwärts des Wärmetauschers (4, 5, 6, 7) Wärmeträgerfluid/Arbeitsfluid angebracht ist, und dass ein Bypass-Kreislauf (45, 55, 65, 75) einen Punkt des geschlossenen Kreislaufs (3), der sich stromaufwärts von diesem Ein/Aus-Ventil (44, 54, 64, 74) befindet, mit einem Punkt des geschlossenen Kreislaufs (3) verbindet, der sich stromabwärts des Wärmetauschers (4, 5, 6, 7) Wärmeträgerfluid/Arbeitsfluid befindet, und dass dieser Bypass-Kreislauf (45, 55, 65, 75) mit einem Ein/Aus-Ventil (450, 550, 650, 750) versehen ist.

9. Anlage nach einem der vorhergehenden Ansprüche, **dadurch gekennzeichnet, dass** der kryogene Kraftstoff verflüssigtes Erdgas oder flüssiger Wasserstoff ist.

10. Anlage nach Anspruch 3, **dadurch gekennzeichnet, dass** der Zweiphasen-Wärmetauscher (22) kryogener Kraftstoff/Wärmeträgerfluid ein Plattenwärmetauscher ist.

11. Luftfahrzeug-Turbomaschine (1), **dadurch gekennzeichnet, dass** sie eine Brennkammer (15), die mit kryogenem Kraftstoff versorgt wird, und eine Anlage (2) zum Erwärmen dieses kryogenen Kraftstoffs nach einem der Ansprüche 1 bis 10 umfasst.

## Claims

1. An installation (2) for heating cryogenic fuel supplying the combustion chamber (15) of an aircraft turbine engine (1), this installation (2) comprising:
- a storage tank (20) for said cryogenic fuel in the liquid state,
- a supply line (21) configured to connect said tank (20) to said combustion chamber (15) of the aircraft turbine engine,
- a closed circuit (3) for circulation of a heat-transfer fluid,
- a cryogenic fuel/heat-transfer fluid heat exchanger (22) and at least one heat-transfer fluid/working fluid heat exchanger (4, 5, 6, 7), mounted in series in said closed circuit (3), the cryogenic fuel/heat-transfer fluid heat exchanger (22) enabling heating of the cryogenic fuel by an input of heat delivered by the heat-transfer fluid,
**characterised in that** the closed circuit (3) for circulation of the heat-transfer fluid comprises a pump (30) for circulating said heat-transfer fluid and a closed expansion vessel (31), connected to said closed circuit (3) upstream of said pump (30) with respect to the direction of circulation of the heat-transfer fluid in the closed circuit (3), and **in that** said pump (30) is controlled by a central unit (8) so as to ensure a heat-transfer fluid flow rate inside the closed circuit (3) which enables cooling of the working fluid or fluids and heating of the cryogenic fuel according to the operating phases of the aircraft, and so that the closed expansion vessel (31) keeps the heat-transfer fluid circulating in said closed circuit (3) at a pressure such that it remains in the liquid state and does not change phase, **in that** the installation (2) comprises at least two heat-transfer fluid/working fluid heat exchangers (4, 5, 6, 7), including a heat exchanger (4) between the heat-transfer fluid and the bleed air taken at the outlet of the turbine engine compressor and a heat exchanger (6) between the heat-transfer fluid and the air cooling the turbine blade and **in that** the heat exchanger (4) between the heat-transfer fluid and the bleed air taken at the outlet of the turbine engine compressor is disposed upstream of the heat exchanger (6) between the heat-transfer fluid and the air cooling the turbine blades or upstream of the heat exchanger (6) between the heat-transfer fluid and the air cooling the turbine blades and of the other heat-transfer fluid/working fluid heat exchangers (5, 7), with respect to the direction of circulation of the heat-transfer fluid in the closed circuit (3).

2. The installation according to claim 1, **characterised in that** it comprises a pump (23) disposed in the supply line (21) between said tank (20) and the heat exchanger (22), **in that** this pump (23) is a high-pressure pump which can compress the cryogenic fuel in the liquid state in order to bring it to a pressure greater than its critical pressure and **in that** said cryogenic fuel/heat-transfer fluid heat exchanger (22) is a supercritical heat exchanger which can heat the cryogenic fuel to a temperature greater than its critical temperature in order to bring it into the supercritical fluid state before its introduction into the combustion chamber (15).

3. The installation according to claim 1, **characterised in that** it comprises a pump (23) disposed in the supply line (21) between said tank (20) and the heat exchanger (22), **in that** this pump (23) is a pump which can compress the cryogenic fuel in the liquid state in order to bring it to a pressure less than its critical pressure and **in that** said cryogenic fuel/heat-transfer fluid heat exchanger (22) is a two-phase heat exchanger, which can heat the cryogenic fuel by an input of heat delivered by said heat-transfer fluid, in order to take this cryogenic fuel from the liquid state to the gaseous state, before its introduction into the combustion chamber (15).

4. The installation according to any one of the preceding claims, **characterised in that** the working fluid of the heat-transfer fluid/working fluid heat exchanger (4, 5, 6, 7) is chosen from the bleed air taken at the outlet of the turbine engine compressor, the lubricating oil, the cooling air of the turbine blades of the turbine engine and the exhaust gas at the outlet of the turbine engine nozzle.

5. The installation according to any one of the preceding claims, **characterised in that** it comprises a heat exchanger (7) between the heat-transfer fluid and the exhaust gas at the outlet of the turbine engine nozzle and **in that** this is mounted in series with the heat exchanger (4) between the heat-transfer fluid and the bleed air taken at the outlet of the turbine engine compressor, so as to be located downstream thereof with respect to the direction of circulation of the heat-transfer fluid in the closed circuit (3).

6. The installation according to any one of the preceding claims, **characterised in that** it comprises at least the heat exchanger (4) between the heat-transfer fluid and the bleed air taken at the outlet of the turbine engine compressor, a heat-transfer fluid/oil heat exchanger (5), the heat exchanger (6) between the heat-transfer fluid and the air cooling the turbine blades, and a heat exchanger (7) between the heat-transfer fluid and the exhaust gas at the outlet of the turbine engine nozzle, mounted in series in the closed circuit (3) for circulation of the heat-transfer fluid.

7. The installation according to claim 6, **characterised in that** it comprises the heat exchanger (4) between the heat-transfer fluid and the bleed air taken at the outlet of the turbine engine compressor, the heat-transfer fluid/oil heat exchanger (5), the heat exchanger (6) between the heat-transfer fluid and the air cooling the turbine blades and the heat exchanger (7) between the heat-transfer fluid and the exhaust gas at the outlet of the turbine engine nozzle, mounted in series and in this order in the closed circuit (3) for circulation of the heat-transfer fluid.

8. The installation according to any one of the preceding claims, **characterised in that** it comprises at least two heat-transfer fluid/working fluid heat exchangers (4, 5, 6, 7) and **in that** for at least one of these two heat-transfer fluid/working fluid heat exchangers (4, 5, 6, 7), an on-off valve (44, 54, 64, 74) is mounted in said closed circuit (3), upstream of said heat-transfer fluid/working fluid heat exchanger (4, 5, 6, 7), and **in that** a bypass circuit (45, 55, 65, 75) connects a point of said closed circuit (3) located upstream of this on-off valve (44, 54, 64, 74) to a point of said closed circuit (3) located downstream of said heat heat-transfer fluid/working fluid exchanger (4, 5, 6, 7) and **in that** this bypass circuit (45, 55, 65, 75) is provided with an on-off valve (450, 550, 650, 750).

9. The installation according to any one of the preceding claims, **characterised in that** the cryogenic fuel is liquefied natural gas or liquid hydrogen.

10. The installation according to claim 3, **characterised in that** said two-phase cryogenic fuel/heat-transfer fluid heat exchanger (22) is a plate exchanger.

11. An aircraft turbine engine (1), **characterised in that** it comprises a combustion chamber (15) supplied with cryogenic fuel and an installation (2) for heating this cryogenic fuel according to any one of claims 1 to 10.
